# EUROPÄISCHE PATENTSCHRIFT

(11) **EP 1 887 444 B1**
(45) Veröffentlichungstag und Bekanntmachung des Hinweises auf die Patenterteilung: **03.12.2008**
(21) Anmeldenummer: 06016718.6
(22) Anmeldetag: 10.08.2006
(51) Int. Cl.: G05B 19/042, G05B 19/05

(54) **Prozesssteuerung**
Process control
Commande de processus

(43) Veröffentlichungstag der Anmeldung: 13.02.2008
(73) Patentinhaber: SICK AG, 79183 Waldkirch (DE)
(72) Erfinder: Dold, Franz, 78120 Furtwangen (DE); Hippenmeyer, Irina, 79232 March (DE)
(74) Vertreter: Manitz, Finsterwald & Partner GbR

(56) Entgegenhaltungen:
- EP-A- 1 589 386
- WO-A-20/05106229
- DE-A1- 4 242 792

## Beschreibung

Die Erfindung betrifft ein Verfahren sowie ein System zur Prozesssteuerung.

In vielen Applikationen der Automatisierungs- und Prozesstechnik muss die Prozesssteuerung nicht nur den eigentlichen Arbeitsprozess steuern, sondern es müssen außerdem Sicherheitsaspekte berücksichtigt werden. Bei der Steuerung von Prozesseinrichtungen, beispielsweise Aktoren, ist eine Kombination von Prozessdaten und Sicherheitsdaten bzw. eine Kombination der entsprechenden Signale beispielsweise dann erforderlich, wenn sicherheitskritische bzw. für den Menschen oder auch für Investitionsgüter gefährliche Bewegungen eines von einem Aktor angetriebenen Maschinenteils sowohl von der eigentlichen Prozesssteuerung kontrolliert als auch in einem Not- oder Störfall von der Sicherheitssteuerung abgeschaltet werden sollen.

Es sind bereits unterschiedliche Methoden zur Kombination der Prozesssteuerung mit der Sicherheitssteuerung bekannt:

Gemäß einer Methode sind die Prozesssteuerung und die Sicherheitssteuerung voneinander getrennt: die Steuerung des eigentlichen Arbeitsprozesses der Prozesseinrichtung erfolgt durch die Prozesssteuerung. Im Fehlerfall schaltet die Sicherheitssteuerung unabhängig von der Prozesssteuerung die Spannungsversorgung der Prozesseinrichtung ab, wodurch die Prozesseinrichtung ungesteuert ausläuft. Es existieren verbesserte Lösungen, bei denen Aktoren mit sogenannter integrierter Sicherheit zum Einsatz kommen, die getrennte Schalteingänge für die Prozesssteuerung einerseits und die Sicherheitssteuerung andererseits aufweisen.

Gemäß einer weiteren bekannten Methode werden die Prozesslogik einerseits und die Sicherheitslogik andererseits in der Sicherheitssteuerung miteinander kombiniert. Es erfolgt hierbei in der Sicherheitssteuerung eine Berücksichtigung der Prozessdaten und der Sicherheitsdaten, wobei der zu steuernden Prozesseinrichtung lediglich ein resultierendes Signal übermittelt wird. Von Nachteil ist hierbei der erforderliche Datenaustausch zwischen der Prozesssteuerung und der Sicherheitssteuerung. In der Praxis werden zunehmend Feldbussysteme eingesetzt, so dass bei Anwendung dieser bekannten Methode sowohl in die Prozesssteuerung als auch in die Sicherheitssteuerung ein gemeinsames Kommunikationsprotokoll implementiert werden muss.

Eine weitere bekannte Methode schlägt vor, den Datenstrom von der Prozesssteuerung zur Prozesseinrichtung durch die Sicherheitssteuerung zu überwachen. Wie bei der vorstehend geschilderten bekannten Methode ist hier allerdings von Nachteil, dass die Daten der Prozesssteuerung im Sicherheitsprogramm der Sicherheitssteuerung berücksichtigt werden müssen. Hierdurch wird nicht nur der Rechenaufwand in der Sicherheitssteuerung erhöht, sondern es ist außerdem eine Kommunikationsbeziehung zwischen der Prozesssteuerung und der Sicherheitssteuerung erforderlich.

Problematisch ist ferner, dass der Datenaustausch von Prozessdaten und Sicherheitsdaten im Sicherheitsprogramm häufig kritisch ist, denn es besteht die Gefahr, dass insbesondere durch Unbedarftheit beim Anwender für Sicherheitsfunktionen ausschließlich nicht sichere Eingangssignale der Prozesssteuerung verwendet werden, die nicht sicher erfasst wurden. So kann beispielsweise versehentlich eine Konfiguration realisiert werden, in der an einem nicht sicheren Eingangsmodul ein einem "Not-Aus" entsprechendes Signal eingelesen und hierdurch aufgrund des Datenaustausches in der Sicherheitssteuerung eine gefährliche Bewegung eines Aktors gesteuert wird. Dies stellt einen für die praktische Anwendung nicht akzeptierbaren Bruch in der Sicherheitskette dar.

Eine entscheidend verbesserte Art und Weise der Prozesssteuerung ist aus der deutschen Patentanmeldung DE-A-10 2004 018642 der Anmelderin bekannt.

Hierbei ist für die zu steuernde Prozesseinrichtung, z.B. einen Aktor, eine lokale Steuereinheit vorgesehen, die zur logischen Verknüpfung der Prozesssignale und der Sicherheitssignale ausgebildet ist. Die Steuereinheit verarbeitet die Prozesssignale und die Sicherheitssignale und stellt das Ergebnis der logischen Verknüpfung an ihrem Steuerausgang bereit, an den der Aktor angeschlossen ist. Bei dem Steuerausgang der Steuereinheit handelt es sich folglich um einen sicherheitsgerichteten Ausgang, der unter Berücksichtigung der nicht sicheren Prozesssignale, die auch als Standard-Signale bezeichnet werden, gesteuert wird.

Durch dieses Vorsehen der lokalen Steuereinheit wird eine vorteilhafte Dezentralisierung der Prozesssteuerung erzielt, die insbesondere mit einer geringen Anzahl von Komponenten auskommt. Durch die Verknüpfung der Prozesssignale mit den Sicherheitssignalen in der lokalen Steuereinheit wird die Logik der Steuerung gewissermaßen in die dezentrale, lokale Steuereinheit verlagert. Durch die logische Verknüpfung der Prozesssignale und der Sicherheitssignale kann insbesondere eine Überwachung auf Übereinstimmung von Prozesssteuerung und Sicherheitssteuerung in der lokalen Steuereinheit erfolgen, wodurch ein besonders hohes Maß an Sicherheit erreicht wird. Von Vorteil ist ferner, dass bestehende Anlagen einfach durch den Einbau dieser Steuereinheit nachgerüstet werden können, und zwar unter Beibehaltung der existierenden Module zur Prozess- und Sicherheitssteuerung.

In Bezug auf die Sicherheit können dieses bekannte Verfahren und dieses bekannte System entweder in einer so genannten Local-Auslegung oder einer so genannten Remote-Auslegung realisiert werden. In der Local-Variante ist das Sicherheitsmodul direkt mit der Steuereinheit verbunden und insbesondere im Bereich der Steuereinheit und damit der zu steuernden Prozesseinrichtung angeordnet. In der Remote-Variante ist das Sicherheitsmodul ebenso wie das Prozessmodul über ein gemeinsames Kommunikationssystem insbesondere in Form eines Feldbussystems mit der Steuereinheit verbunden.

Von Vorteil insbesondere bei der Remote-Variante ist, dass für die Verknüpfung der Prozessdaten mit den Sicherheitsdaten in der lokalen Steuereinheit keine Kommunikationsbeziehung zwischen der Sicherheitssteuerung und der Prozesssteuerung erfolgen muss. Ferner braucht in der Sicherheitssteuerung keine erhöhte Rechenleistung zur logischen Verknüpfung der Signale vorgehalten zu werden. Dies ermöglicht es, dem Anwender eine hinsichtlich der Kosten und der Leistung optimierte Lösung anzubieten.

Ferner ist von Vorteil, dass aufgrund der beiden bestehenden Kommunikationsbeziehungen zwischen der Steuereinheit einerseits und der Sicherheitssteuerung und der Prozesssteuerung andererseits am Steuerausgang der Steuereinheit eventuell auftretende Fehler gleichzeitig an die Sicherheitssteuerung und die Prozesssteuerung gemeldet werden können. Es ist insbesondere nicht erforderlich, eine Fehlerdiagnose von der Steuereinheit über die Sicherheitssteuerung an die Prozesssteuerung durchzuschleifen.

Insbesondere bei der Local-Variante, bei der das Sicherheitsmodul direkt mit der Steuereinheit verbunden ist, ist von Vorteil, dass die Prozesssteuerung auf den fehlersicheren Steuerausgang der Steuereinheit zugreifen kann, ohne dass weitere Sicherheitskomponenten in das bestehende Kommunikationssystem, insbesondere ein Feldbussystem, über welches die Prozesssteuerung mit der lokalen Steuereinheit kommuniziert, integriert werden müssen. Insbesondere kann ein entsprechendes Busmodul in ein bestehendes nicht sicheres Feldbussystem eingebunden werden.

Da zusätzlich zu dem direkt mit der Steuereinheit verbundenen Sicherheitsmodul keine zusätzliche Sicherheitssteuerung im Prozesssystem erforderlich ist, ergibt sich für den Anwender eine erhebliche Kostenersparnis. Ein an der lokalen Steuereinheit vorgesehener lokaler Sicherheitseingang für das Sicherheitsmodul kann direkt den lokalen sicheren Steuerausgang der Steuereinheit unter Berücksichtigung der Prozesssignale steuern.

Zum Stand der Technik wird im übrigen allgemein auf DE 199 28 517 C2, DE 199 25 693 A1, DE 102 01 212 A1, DE 102 11 939 A1, DE 102 11 938 A1 sowie DE 199 22 561 A1 verwiesen.

Trotz der bereits insbesondere durch die Prozesssteuerung gemäß DE-A-10 2004 018642 erzielten Verbesserungen bleibt der Nachteil bestehen, dass die erforderliche Signalverarbeitung und insbesondere die logische Verarbeitung zu einer Erhöhung der Ansprechzeit der verwendeten Sicherheitssensoren führen. Auch die mit der Signalverarbeitung einhergehende Datenübertragung erhöht die Ansprechzeiten und damit die Sicherheitsabstände an den zu sichernden Anlagen. Als Beispiel sei erwähnt, dass bei Anwendungen mit berührungslos wirkenden Schutzeinrichtungen derzeit typische Ansprechzeiten im Bereich von 70 bis 300 ms auftreten, was Sicherheitsabständen von etwa 60 cm entspricht. In vielen Anwendungen ist es wünschenswert, diese Sicherheitsabstände zu reduzieren.

Ein weiterer Nachteil, der sich in Verbindung mit dem Einsatz von Sicherheitsbussystemen zeigt, besteht darin, dass sich die Datenübertragungsrate bei den Sicherheitssignalen durch die Ansprechzeit des zeitkritischsten Sensors bestimmt. Zeitkritische Sensoren sind insbesondere Lichtgitter, die eine besonders geringe Ansprechzeit erfordern. Damit ist auch eine besonders schnelle Datenübertragung über das Sicherheitsbussystem erforderlich, die im Ergebnis zu einer hohen Buslast führt. Die hohe Buslast wiederum hat zur Folge, dass die Anzahl von Teilnehmern im entsprechenden Netzwerk beschränkt ist.

Aufgabe der Erfindung ist es, Prozesssteuerungen auf möglichst einfache und kostengünstige Weise möglichst sicher zu machen, wobei außerdem die durch das System bedingte Ansprechzeit möglichst gering gehalten werden soll.

Die Lösung dieser Aufgabe erfolgt zum einen durch die Merkmale des unabhängigen Verfahrensanspruchs 1. Demnach werden die nicht sicherheitsrelevanten Prozesssignale des Prozessmoduls und die die Prozesssicherheit betreffenden Sicherheitssignale des Sicherheitsmoduls logisch miteinander verknüpft. Zumindest ein lokales Sicherheitssignal eines lokalen Sicherheitssensors wird direkt unter Umgehung dieser logischen Verknüpfung über einen Schnellschaltpfad wenigstens einem Steuerausgang einer der Prozesseinrichtung zugeordneten lokalen Steuereinheit zugeführt, um eine schnelle Zustandsänderung an der zu steuernden Prozesseinrichtung, die an den Steuerausgang angeschlossen ist, zu bewirken. Dabei umfasst der Schnellschaltpfad eine Schnellschaltfunktion, mit der das Ergebnis der logischen Verknüpfung und das lokale Sicherheitssignal gemeinsam ausgewertet werden, wobei eine über den Schnellschaltpfad bewirkte schnelle Zustandsänderung an der zu steuernden Prozesseinrichtung erneut geändert und insbesondere wieder rückgängig gemacht wird, wenn oder sobald die gemeinsame Auswertung zu einem vorgegebenen Ergebnis führt.

Die Lösung der der Erfindung zugrunde liegenden Aufgabe erfolgt zum anderen durch die Merkmale des unabhängigen Vorrichtungsanspruchs. Demnach ist die zu steuernde Prozesseinrichtung an den Steuerausgang einer lokalen, der Prozesseinrichtung zugeordneten Steuereinheit angeschlossen, wobei ein Logikmodul vorgesehen ist, in dem nicht sicherheitsrelevante Prozesssignale des Prozessmoduls und die Prozesssicherheit betreffende Sicherheitssignale des Sicherheitsmoduls logisch miteinander verknüpfbar sind. Ferner ist wenigstens ein lokaler Sicherheitseingang vorgesehen, von dem ein lokales Sicherheitssignal eines lokalen Sicherheitssensors direkt unter Umgehung des Logikmoduls dem Steuerausgang der Steuereinheit zuführbar ist, um eine schnelle Zustandsänderung an der zu steuernden Prozesseinrichtung zu bewirken. Des Weiteren ist ein Schnellschaltmodul vorgesehen, mit dem das Ergebnis der logischen Verknüpfung und das über den lokalen Sicherheitseingang zugeführte lokale Sicherheitssignal gemeinsam auswertbar sind, wobei das Schnellschaltmodul dazu ausgebildet ist, eine bewirkte schnelle Zustandsänderung an der zu steuernden Prozesseinrichtung erneut zu ändern, insbesondere wieder rückgängig zu machen, wenn oder sobald die gemeinsame Auswertung zu einem vorgegebenen Ergebnis führt.

In Bezug auf das vorstehend angegebene erfindungsgemäße Verfahren ist somit die Schnellschaltfunktion in das Schnellschaltmodul integriert, das somit einen Bestandteil des Schnellschaltpfades bildet, der außerdem den lokalen Sicherheitseingang und den Steuerausgang der lokalen Steuereinheit (Ausgangsmodul) umfasst.

Das wenigstens eine lokale Sicherheitssignal, das zur (schnellen) direkten Ansteuerung des Steuerausgangs bzw. der Prozesseinrichtung benutzt wird, und das wenigstens eine lokale Sicherheitssignal, das zur (langsamen) logischen Verknüpfung mit wenigstens einem Prozesssignal vorgesehen ist, können, müssen aber nicht identisch sein.

Wie bei der eingangs erläuterten Prozessteuerung gemäß DE-A-10 2004 018642 erfolgt auch erfindungsgemäß eine logische Verknüpfung der Prozesssignale und der Sicherheitssignale. Es kommt erfindungsgemäß aber nicht darauf an, ob diese logische Verknüpfung in einer der zu steuernden Prozesseinrichtung zugeordneten lokalen Steuereinheit (die auch als Ausgangsmodul bezeichnet wird) oder an einer anderen Stelle erfolgt, beispielsweise in einer zentralen oder übergeordneten Sicherheits-SPS. Die lokale Steuereinheit kann, muss aber nicht zur Durchführung der logischen Verknüpfung ausgelegt sein, d.h. die erfindungsgemäße Schnellschaltfunktion ist prinzipiell unabhängig von dem Vorsehen einer entsprechenden Logik-Einrichtung innerhalb der lokalen Steuereinheit.

Die Erfindung zeichnet sich vielmehr dadurch aus, dass ein lokales Sicherheitssignal, insbesondere ein Sicherheitssignal eines eine Überwachungs- oder Sicherungsfunktion ausführenden lokalen Sicherheitssensors, bereitgestellt und direkt der zu steuernden Prozesseinrichtung zugeführt wird, und zwar insbesondere über einen Steuerausgang einer der Prozesseinrichtung zugeordneten lokalen Steuereinheit (Ausgangsmodul).

Diese erfindungsgemäße direkte Ansteuerung der Prozesseinrichtung mittels des lokalen Sicherheitssignals wird hier als Schnellschaltpfad bezeichnet, der sich dadurch auszeichnet, dass zeitraubende Signallaufzeiten und Datenverarbeitungen, insbesondere die erwähnte logische Verknüpfung der Sicherheitssignale mit den Prozesssignalen, vermieden oder umgangen werden. Auf diese Weise kann eine extrem schnelle Zustandsänderung an der zu steuernden Prozesseinrichtung, beispielsweise deren Abschaltung, erreicht werden. Die Ansprechzeiten bezüglich entsprechender Sicherheitssensoren lassen sich auf diese Weise z.B. von den vorstehend erwähnten 70 bis 300 ms auf etwa 1 bis 10 ms reduzieren, was gleichbedeutend ist mit einer beträchtlichen Reduzierung der Sicherheitsabstände von etwa 60 cm auf 2 cm.

Die Erfindung geht aber über die schnelle Ansteuerung mittels eines lokalen Sicherheitssignals noch hinaus, indem außerdem eine Schnellschaltfunktion vorgesehen ist, die das (langsame) Ergebnis der logischen Verknüpfung zwischen den Prozesssignalen und den Sicherheitssignalen einerseits und das (schnelle) lokale Sicherheitssignal, das der zu steuernden Prozesseinrichtung direkt zugeführt wird, andererseits gemeinsam auswertet, und zwar mit dem Ziel, die mittels des schnellen lokalen Sicherheitssignals bewirkte schnelle Zustandsänderung an der zu steuernden Prozesseinrichtung, beispielsweise deren Abschaltung, erneut zu ändern, die Prozesseinrichtung also beispielsweise wieder einzuschalten, wenn die Auswertung zu einem bestimmten Ergebnis führt.

Beispielsweise erfolgt die erneute Zustandsänderung dann, wenn das als Folge der logischen Verknüpfung der Prozesssignale mit den Sicherheitssignalen erzeugte Steuersignal (Ergebnis der logischen Verknüpfung) den gleichen Signalverlauf vorlegt wie das lokale Sicherheitssignal. Wenn beispielsweise die durch die Schnellschaltfunktion durchgeführte gemeinsame Auswertung des sich aus der logischen Verknüpfung ergebenden Steuersignals und des lokalen Sicherheitssignals ergibt, dass die schnelle Zustandsänderung berechtigt war, die logische Verknüpfung die schnelle Zustandsänderung also - gewissermaßen nachträglich - bestätigt oder quittiert, kann dies als zwingende Voraussetzung für die erneute Zustandsänderung gefordert werden. Tatsächlich erfolgen kann die erneute Zustandsänderung z.B. erst dann, wenn der lokale Sicherheitssensor wieder in seinen ursprünglichen Zustand zurückgekehrt ist und auch dieser Zustand durch die logische Verknüpfung bestätigt bzw. quittiert worden ist. Erst dann sind z.B. beide Signale, d.h. das Steuersignal (Ergebnis der logischen Verknüpfung) und das lokale Sicherheitssignal, wieder aktiv, d.h. signalisieren einen "sicheren" Zustand, so dass die erneute Zustandsänderung ausgelöst, also z.B. der Steuerausgang der lokalen Steuereinheit wieder freigegeben, werden kann, um eine an den Steuerausgang angeschlossene, zuvor schnell abgeschaltete Prozesseinrichtung wieder einzuschalten.

Allgemein ausgedrückt ist also gemäß einem Ausführungsbeispiel der Erfindung vorgesehen, dass eine schnelle Zustandsänderung an der zu steuernden Prozesseinrichtung nur dann erneut geändert wird, wenn durch das Ergebnis der logischen Verknüpfung die schnelle Zustandsänderung bestätigt wird, wobei bevorzugt die erneute Änderung erst dann erfolgt, wenn der lokale Sicherheitssensor in einen Zustand, insbesondere einen sicheren Zustand, entsprechend einem Zustand vor Aussendung des lokalen Sicherheitssignals übergegangen und dieser Zustand durch das Ergebnis der logischen Verknüpfung ebenfalls bestätigt worden ist.

Grundsätzlich wird erfindungsgemäß der Umstand ausgenutzt, dass das Ergebnis der logischen Verknüpfung aufgrund der vorhandenen Übertragungs- und Verarbeitungszeiten im System den Ort der Schnellschaltfunktion später erreicht als das direkte lokale Sicherheitssignal. Somit kann dieser Nachteil einer Signalverzögerung, der durch die Erfindung gerade beseitigt werden soll, in vorteilhafter Weise für eine so genannte Wiederanlaufsperre genutzt werden, durch die verhindert wird, dass im Anschluss an eine mittels des schnellen lokalen Sicherheitssignals bewirkte schnelle Zustandsänderung an der zu steuernden Prozesseinrichtung eine weitere Zustandsänderung - insbesondere ein Wiedereinschalten - zu früh erfolgt.

Wie bereits erwähnt, ist ein wesentlicher Vorteil der Erfindung die erzielbare Reduzierung der Ansprechzeit, die sich insbesondere in Verbindung mit Anwendungen mit berührungslos wirkenden Schutzeinrichtungen zeigt. Die erwähnten Reduzierungen auf 1 bis 10 ms - entsprechend einem Sicherheitsabstand von etwa 2 cm - ergeben sich bei typischen Bussystemen wie PROFSAFE, DEVICENEt Safety, SafetyBus p und auch in anderen Sicherheitsbussystemen.

Da erfindungsgemäß zeitkritische Signale, also lokale Sicherheitssignale z.B. von Sicherheitssensoren, die ein sehr niedrige Ansprechzeit erfordern, direkt der zu steuernden Prozesseinrichtung oder einer lokalen Steuereinheit, an welche die Prozesseinrichtung angeschlossen ist, zugeführt werden können, sind auch die ebenfalls eingangs erwähnten Probleme in Verbindung mit hohen Buslasten beseitigt.

Ferner ist von Vorteil, dass durch die direkte Ansteuerung der Prozesseinrichtung mittels des lokalen Sicherheitssignals die hierdurch reduzierte Ansprechzeit z.B. eines das lokale Sicherheitssignal ausgebenden lokalen Sicherheitssensors eine konstante Systerngröße ist. Die Ansprechzeit ist somit insbesondere unabhängig von der Ausgestaltung der Datenübertragungsrate, des Sicherheitsbussystems oder der verwendeten Logik. Auch spätere Logikerweiterungen, z.B. in der SPS, oder zusätzliche Geräte im Netzwerk bleiben in vorteilhafter Weise ohne Einfluss auf die Ansprechzeit.

Die mit der erfindungsgemäßen Schnellschaltfunktion erreichbare Verriegelung im Anschluss an die schnelle Zustandsänderung ermöglicht es dem Anwender ferner, in der Sicherheits-SPS das Programm in gewohnter Weise zentral zu strukturieren. Eine Rücksichtnahme auf die dezentrale Schnellschaltfunktion ist nicht erforderlich. Alle Sicherheitssignale einschließlich derjenigen Sicherheitssignale, die auf die Schnellschaltfunktion wirken und gemeinsam mit dem lokalen Sicherheitssignal ausgewertet werden, können entsprechend den jeweiligen Anforderungen in der Sicherheits-SPS logisch miteinander verknüpft werden. In der dezentralen oder lokalen Steuereinheit (Ausgangsmodul) sind dann lediglich diejenigen Schaltsignale auszuwählen, die auf den lokalen Steuerausgang, d.h. auf die zu steuernde Prozesseinrichtung, wirken sollen.

Das Konzept der Schnellschaltfunktion ermöglicht eine einfache Nachrüstung bestehender Anlagen mit den entsprechenden Sicherheitseinrichtungen. Durch den Einbau einer mit der erfindungsgemäßen Schnellschaltfunktion versehenen lokalen Steuereinheit können ein bestehendes Programm einer Standard-SPS beibehalten und gleichzeitig die Sicherheitsabstände reduziert werden, um hierdurch Prozessabläufe zu optimieren.

Weitere bevorzugte Ausführungsformen der Erfindung sind in den abhängigen Ansprüchen, der Beschreibung sowie der Zeichnung angegeben.

Wie vorstehend bereits angedeutet, ist es bevorzugt, wenn die Schnellschaltfunktion in der lokalen Steuereinheit ausgeführt wird.

Die logische Verknüpfung der nicht sicherheitsrelevanten Prozesssignale des Prozessmoduls und der die Prozesssicherheit betreffenden Sicherheitssignale des Sicherheitsmoduls können ebenfalls in der lokalen Steuereinheit erfolgen. Alternativ kann diese logische Verknüpfung in einem zentralen oder übergeordneten Sicherheitsmodul erfolgen, das insbesondere in Form einer Sicherheits-SPS vorgesehen ist.

Was das Prozesssteuerungssystem anbetrifft, so ist bevorzugt das Schnellschaltmodul in die Steuereinheit integriert. Das Logikmodul kann in die Steuereinheit oder in ein zentrales oder übergeordnetes Sicherheitsmodul, insbesondere eine Sicherheits-SPS, integriert sein. Ferner ist es bevorzugt, wenn das Schnellschaltmodul dem Steuerausgang der Steuereinheit vorgeschaltet und insbesondere zwischen das Logikmodul und den Steuerausgang geschaltet ist.

Wie vorstehend bereits angedeutet, kann die logische Verknüpfung der Prozesssignale mit den Sicherheitssignalen entweder dezentral (lokal), beispielsweise in der lokalen bzw. dezentralen Steuereinheit, oder zentral erfolgen, beispielsweise in einer übergeordneten Sicherheits-SPS. Manche der nachstehenden Ausführungen, die weitere Ausführungsformen der Erfindung betreffen, beziehen sich lediglich auf die Variante mit dezentraler bzw. lokaler logischer Verknüpfung, andere Ausführungen beziehen sich auf beide Varianten und sind somit unabhängig von dem Ort, an dem die logische Verknüpfung stattfindet.

Gemäß einem Ausführungsbeispiel der Erfindung wird zumindest ein Sicherheitssignal, das mit den Prozesssignalen logisch verknüpft wird, selbst durch eine logische Verknüpfung von die Prozesssicherheit betreffenden Sicherheitssignalen gebildet. Hierdurch kann im Fall einer lokalen logischen Verknüpfung mit Hilfe der lokalen Steuereinheit gewissermaßen eine dezentrale Sicherheitssteuerung realisiert werden, die grundsätzlich beliebig komplex ausgelegt sein kann.

Ein besonders hohes Maß an Sicherheit wird erzielt, wenn gemäß einer weiteren Ausführungsform der Erfindung die logische Verknüpfung zwischen den Prozesssignalen und den Sicherheitssignalen derart ausgelegt wird, dass ein diskrepantes Signaleingangsmuster ein Verbleiben des Steuerausgangs in einem sicheren Zustand bedeutet.

Vorzugsweise wird die logische Verknüpfung zwischen den Prozesssignalen und den Sicherheitssignalen als eine logische UND-Verknüpfung ausgelegt.

Entsprechend wird bevorzugt für den Fall, dass das mit den Prozesssignalen zu verknüpfende Sicherheitssignal selbst durch eine logische Verknüpfung von die Prozesssicherheit betreffenden Sicherheitssignalen gebildet wird, die logische Verknüpfung dieser Sicherheitssignale als eine logische UND-Verknüpfung ausgelegt.

Grundsätzlich kann jedoch die logische Verknüpfung jede beliebige Form annehmen.

Wie eingangs bereits angedeutet, ist bei einer möglichen Ausgestaltung des erfindungsgemäßen Prozesssteuerungssystems zumindest das Prozessmodul über ein Feldbussystem mit der lokalen Steuereinheit verbunden.

In einer so genannten Remote-Variante sind vorzugsweise das Prozessmodul und das Sicherheitsmodul entfernt von der Steuereinheit angeordnet und über ein gemeinsames Kommunikationssystem, insbesondere ein Feldbussystem, mit der Steuereinheit verbunden.

Bei einer so genannten Local-Variante ist vorzugsweise vorgesehen, dass das Prozessmodul entfernt von der Steuereinheit angeordnet und über ein zentrales Kommunikationssystem, insbesondere ein Feldbussystem, mit der Steuereinheit verbunden ist, und dass das insbesondere in Form eines Sicherheitssensors vorgesehene Sicherheitsmodul lokal im Bereich der Steuereinheit und insbesondere entfernt von dem Prozessmodul angeordnet und direkt mit der Steuereinheit verbunden ist.

Das Prozessmodul ist vorzugsweise in Form einer SPS (speicherprogrammierbare Steuerung) vorgesehen.

Das Sicherheitsmodul ist vorzugsweise in Form eines Sicherheitssensors vorgesehen, kann grundsätzlich aber auch eine Sicherheitssteuerung, insbesondere in Form einer SPS, umfassen.

Die Steuereinheit kann gemäß einem weiteren Ausführungsbeispiel der Erfindung mehrere Sicherheitseingänge für Sicherheitssignale umfassen, die mittels des Logikmoduls zu einem resultierenden Sicherheitssignal logisch miteinander verknüpfbar sind, wobei das resultierende Sicherheitssignal mittels des Logikmoduls wiederum mit den Prozesssignalen logisch verknüpfbar ist.

Zur weiteren Erhöhung der Sicherheit ist bevorzugt vorgesehen, dass für zumindest eine, insbesondere für jede, zu steuernde Prozesseinrichtung in der Steuereinheit mehrere, insbesondere zwei, Kanäle vorgesehen sind, die jeweils für die logische Verknüpfung von Prozesssignalen und Sicherheitssignalen ausgebildet sind. Jeder Kanal kann als unabhängiger Sicherheitsabschaltpfad ausgebildet sein, so dass für jede zu steuernde Prozesseinrichtung mehrere, insbesondere zwei, unabhängige Abschaltpfade vorhanden sind.

Gemäß einem weiteren Ausführungsbeispiel der Erfindung kann ein dritter unabhängiger Sicherheitsabschaltpfad dadurch realisiert werden, dass die Spannungsversorgung für den Steuerausgang der Steuereinheit von dem logischen Signalweg und/oder von der Spannungsversorgung der Prozesseinrichtung getrennt vorgesehen ist. Auf diese Weise wird eine zusätzliche Möglichkeit geschaffen, den Steuerausgang sicher stillzusetzen.

Ferner kann erfindungsgemäß vorgesehen sein, dass die Prozesssignale alternativ oder zusätzlich über lokale Sicherheitseingänge und/oder lokale nicht sicherheitsgerichtete Signaleingänge der Steuereinheit zugeführt werden. Die nicht sicherheitsgerichteten Prozessdaten können also auch von den lokalen Sicherheitseingängen bzw. den nicht sicherheitsgerichteten Signaleingängen der lokalen Steuereinheit eingelesen und verknüpft werden.

Die Erfindung wird im Folgenden beispielhaft unter Bezugnahme auf die Zeichnung beschrieben. Es zeigen:
- Fig. 1: schematisch einen Ausschnitt aus einem erfindungsgemäßen Prozesssteuerungssystem in einer ersten Variante,
- Fig. 2: schematisch eine in dem System von Fig. 1 zum Einsatz kommende Steuereinheit,
- Fig. 3: schematisch einen Ausschnitt aus einem erfindungsgemäßen Prozesssteuerungssystem in einer zweiten Variante, und
- Fig. 4: schematisch einen Ausschnitt aus einem erfindungsgemäßen Prozesssteuerungssystem in einer dritten Variante.

Sofern nicht anders angegeben, bedeuten im Folgenden die mit "Prozess..." beginnenden Begriffe wie z.B. Prozesssteuerung, Prozessdaten und Prozesssignale, dass kein unmittelbarer Bezug zu Sicherheitsaspekten besteht, d.h. die Prozesssteuerung betrifft ausschließlich den eigentlichen Arbeitsprozess und die Prozesssignale bzw. Prozessdaten beinhalten keine Sicherheitssignale bzw. -daten, sondern stellen ausschließlich so genannte nicht sichere Signale bzw. Daten dar. Zu bemerken ist noch, dass in der Praxis zur Unterscheidung zwischen der "Prozesswelt" und der "Sicherheitswelt" anstelle des Begriffs "Prozess..." auch der Begriff "Standard..." verwendet wird.

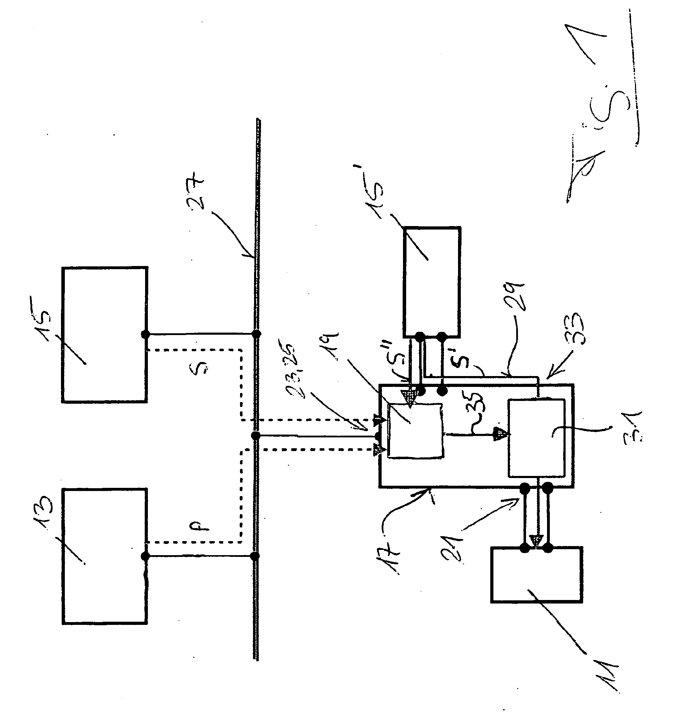

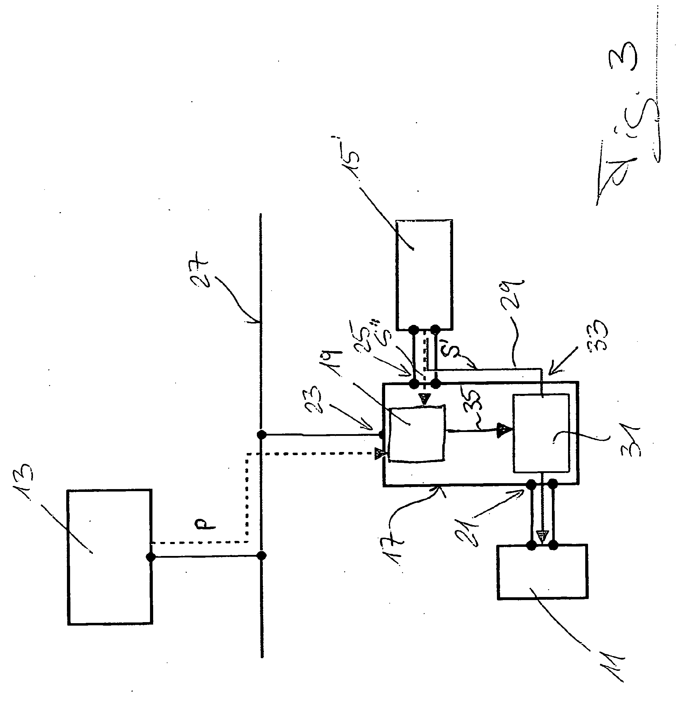

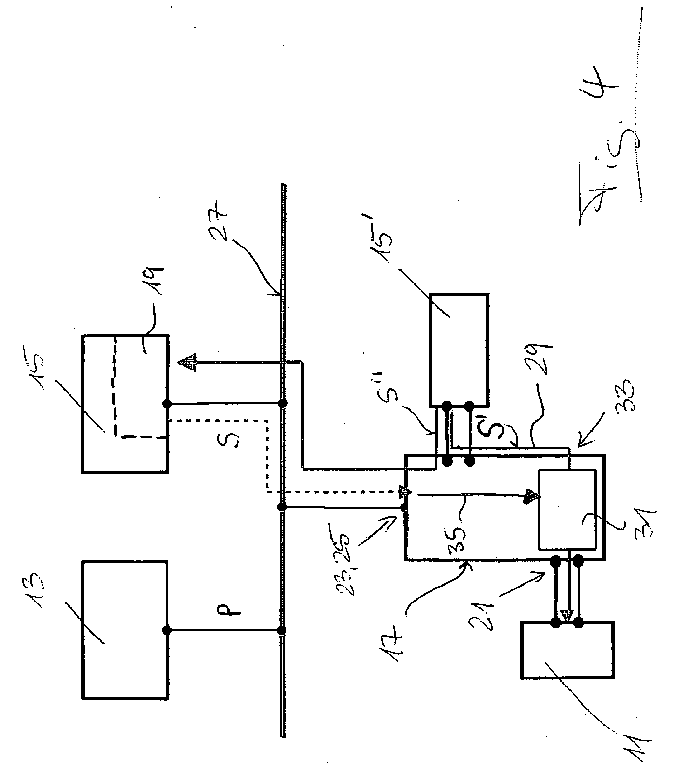

Den drei nachstehend beschriebenen Varianten der Erfindung ist gemeinsam, dass in einem Logikmodul 19 eine Verknüpfung von Prozesssignalen P einer Prozess-SPS 13 mit Sicherheitssignalen S, S" eines oder mehrerer Sicherheitsmodule 15, 15' erfolgt, und zwar mit Sicherheitssignalen S einer zentralen oder übergeordneten Sicherheits-SPS 15 (nicht in der Variante der Fig. 3) sowie Sicherheitssignalen S" eines lokalen Sicherheitssensors 15'. Bezüglich der logischen Verknüpfung besteht ein Unterschied darin, dass bei den Varianten gemäß Fig. 1 und 3 das hierzu vorgesehene Logikmodul 19 in die lokale Steuereinheit 17 integriert ist, wohingegen bei der Variante gemäß Fig. 4 die übergeordnete Sicherheits-SPS 15 ein Logikmodul 19 enthält.

Wiederum überein stimmen die drei beschriebenen Varianten der Erfindung darin, dass das Ergebnis 35 der logischen Verknüpfung einem nachstehend näher beschriebenen Schnellschaltmodul 31 der lokalen Steuereinheit 17 zugeführt wird, wo eine gemeinsame Auswertung dieses Steuersignals 35 mit zumindest einem lokalen Sicherheitssignal S' des Sicherheitssensors 15' erfolgt, worauf ebenfalls nachstehend näher eingegangen wird. Das in den Ausführungsbeispielen in die Steuereinheit 17 integrierte Schnellschaltmodul 31 ist zwischen das Logikmodul 19 und den Steuerausgang 21 der Steuereinheit 17 geschaltet, an den die zu steuernde Prozesseinrichtung 11 angeschlossen ist.

Wie vorstehend bereits erwähnt, können die für die logischen Verknüpfung vorgesehenen Sicherheitssignale S" und die zur direkten Ansteuerung der Prozesseinrichtung 11 vorgesehenen Sicherheitssignale S' identisch sein, wobei dies aber nicht zwingend ist.

In Remote-Varianten gemäß Fig. 1 und 4 kommunizieren eine Prozess-SPS 13 und eine Sicherheits-SPS 15 über ein Feldbussystem 27 mit einer über Signaleingänge 23, 25 an den Feldbus 27 angeschlossenen Steuereinheit 17, die sicherheitsgerichtete Steuerausgänge 21 für zu steuernde Prozesseinrichtungen 11 aufweist. Bei den zu steuernden Prozesseinrichtungen 11 kann es sich beispielsweise um Aktoren bzw. Motoren von Bearbeitungsmaschinen handeln, die Bewegungen ausführen, welche unter bestimmten Umständen für Menschen oder auch Investitionsgüter gefährlich sein können. Zur Unterbindung von solchen sicherheitskritischen Vorgänge ist die Sicherheits-SPS 15 vorgesehen, während die Prozess-SPS 13 unabhängig von Sicherheitsaspekten den eigentlichen Arbeitsprozess steuert.

Gezeigt ist lediglich eine Steuereinheit 17, an die lediglich eine Prozesseinrichtung 11 angeschlossen ist. Grundsätzlich können die Prozesssteuerung 13 und die Sicherheitssteuerung 15 eine beliebig große Anzahl von an das Feldbussystem 27 angeschlossenen Steuereinheiten 17 und damit Prozesseinrichtungen 11 steuern. Ferner ist es grundsätzlich möglich, dass an eine Steuereinheit 17 eine Mehrzahl von Prozesseinrichtungen 11 angeschlossen ist. In diesem Fall ist die Steuereinheit 17 mit einer Mehrzahl von sicherheitsgerichteten Steuerausgängen 21 versehen.

Durch die gestrichelt dargestellten Signalwege ist in den Figuren jeweils angedeutet, dass das Vorsehen eines zentralen Kommunikationssystems wie beispielsweise des Feldbussystems 27 nicht zwingend erforderlich ist, sondern die Prozessteuerung 13 und die Sicherheitssteuerung 15 auch direkt mit der Steuereinheit 17 kommunizieren können, die in diesem Fall mit entsprechenden Signaleingängen ausgestattet ist.

Des Weiteren ist in jeder der drei beschriebenen Varianten ein Sicherheitssensor 15' vorgesehen, bei dem es sich beispielsweise um ein Lichtgitter oder um ein grundsätzlich beliebiges anderes Sicherheitsgerät handelt.

Der Sicherheitssensor 15' liefert lokale Sicherheitssignale S', S", die in dem Ausführungsbeispiel der Fig. 1 zum einen über einen Schnellschaltpfad 29 dem bereits erwähnten Schnellschaltmodul 31 (Signale S') und zum anderen - zusätzlich zu den Prozesssignalen P und den Sicherheitssignalen S der übergeordneten Sicherheits-SPS 15 - dem Logikmodul 19 der Steuereinheit 17 (Signale S") zugeführt werden.

Die Steuereinheit 17, die lokal im Bereich der jeweils zu steuernden Prozesseinrichtung 11 und damit dezentral angeordnet ist, weist das bereits erwähnte Logik-Modul 19 auf, in welchem die von der Prozess-SPS 13 kommenden Prozesssignale P, die von der Sicherheits-SPS 15 kommenden Sicherheitssignale S sowie die vom Sicherheitssensor 15' kommenden lokalen Sicherheitssignale S" verarbeitet werden, worauf nachstehend näher eingegangen wird. Als Ergebnis 35 dieser Signalverarbeitung stellt das Logikmodul 19 sichere Steuersignale 35 zur Verfügung, die auf das Schnellschaltmodul 31 gegeben und von dort auf den Steuerausgang 21 der Steuereinheit 17 gegeben werden.

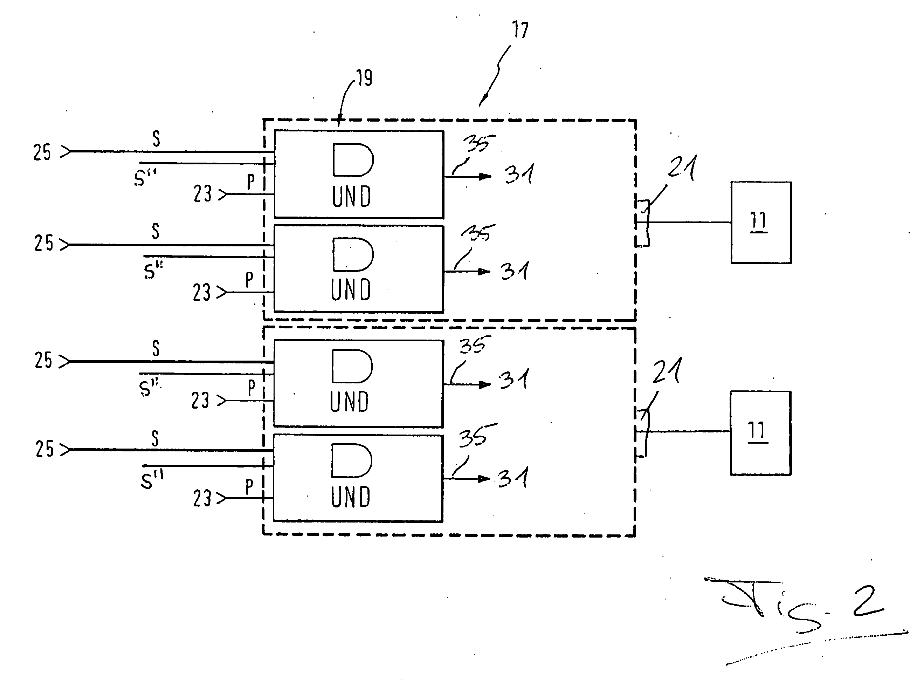

Fig. 2 zeigt schematisch die Einbettung des Logikmoduls 19 der Steuereinheit 17 in das Prozesssystem. In dem dargestellten Ausführungsbeispiel ist für jede der zu steuernden Prozesseinrichtungen 11 eine zweikanalige Ansteuerung vorgesehen, wobei jeweils die beiden Kanäle identisch ausgelegt sind. In jedem Kanal werden die über einen Signaleingang 23 zugeführten Prozessdaten P, die über einen Sicherheitseingang 25 zugeführten Sicherheitsdaten S sowie die lokalen Sicherheitsdaten S" in dem Logikmodul 19 der Steuereinheit 17 einer logischen UND-Verknüpfung unterzogen. Der entsprechende lokale Sicherheitsausgang 21 der Steuereinheit 17 wird von dem Ergebnis 35 dieser logischen Verknüpfung gesteuert.

Auf diese Weise wird für jeden Kanal ein nicht sicherheitsgerichtetes Signal S der Prozess-SPS 13 (Fig. 1), das auf den sicheren Ausgang 21 der Steuereinheit 17 wirken soll, mit sicherheitsgerichteten Signalen S, S" der Sicherheits-SPS 15 und des Sicherheitssensors 15', die mittelbar über das Schnellschaltmodul 31 auf den gleichen sicheren Ausgang 21 wirken sollen, einer logischen UND-Verknüpfung unterzogen.

Da in dem hier beschriebenen Ausführungsbeispiel sowohl die Prozesssignale P als auch die sicherheitsgerichteten Signale S der übergeordneten Sicherheitssteuerung 15 über das industrielle Bussystem 27 zur Steuereinheit 17 übertragen werden, wird für die Übertragung der Sicherheitssignale S ein sicheres Busprotokoll verwendet.

Die logische UND-Verknüpfung im Logikmodul 19 sorgt dafür, dass diskrepante Eingangsmuster dazu führen, dass sichere Ausgänge im sicheren Zustand verbleiben, d.h. es ist ein durchgängiges Signaleingangsmuster von Einsen notwendig, um einen sicheren Ausgang 21 zu schalten.

Das in die Steuereinheit 17 integrierte Schnellschaltmodul 31 gestattet zunächst eine direkte Ansteuerung des Steuerausgangs 21 und damit der daran angeschlossenen Prozesseinrichtung 11 mittels des lokalen Sicherheitssignals S' des Sicherheitssensors 15'. Hierdurch kann beispielsweise die Prozesseinrichtung 11 mit sehr kurzer Ansprechzeit des Sicherheitssensors 15' ausgeschaltet werden, wenn der Sicherheitssensor 15' ein entsprechendes lokales Sicherheitssignal S' aussendet.

Zusätzlich stellt das Schnellschaltmodul 31 eine Schnellschaltfunktion bereit. Diese besteht darin, das lokale Sicherheitssignal S' gemeinsam mit dem zeitverzögert eintreffenden Ergebnis 35 der logischen Verknüpfung des Logikmoduls 19 auszuwerten. Bei dieser gemeinsamen Auswertung kann es sich ebenfalls um eine logische Verknüpfung handeln. Wie im Einleitungsteil bereits erläutert, kann hierdurch insbesondere eine so genannte Wiederanlaufsperre realisiert werden. Das Wiedereinschalten der Prozesseinrichtung 11 wird aufgrund der Schnellschaltfunktion solange verzögert, bis sowohl das lokale Sicherheitssignal S' als auch das Steuersignal 35 (Ergebnis der logischen Verknüpfung) wieder einem aktiven Zustand entspricht, z.B. einem durch eine logische "1" repräsentierten sicheren Zustand.

Voraussetzung hierfür ist jedoch zum einen, dass ein vom Sicherheitssensor 15' erkannter unsicherer Zustand, der z.B. durch ein Sicherheitssignal S' in Form einer logischen "0" repräsentiert wird und zu einer schnellen Abschaltung der Prozesseinrichtung 11 führt, durch die logische Verknüpfung, also das Steuersignal 35, bestätigt wird, indem dieses z.B. ebenfalls einer logischen "0" entspricht. Zum anderen ist erforderlich, dass der Übergang des Sicherheitssensors 15' in einen sicheren Zustand - z.B. nach Beendigung eines Eingriffs in ein den Sicherheitssensor 15' bildendes Lichtgitter - ebenfalls durch das Steuersignal 35 quittiert wird. Das Wiedereinschalten der Prozesseinrichtung erfolgt somit erst dann, wenn das lokale Sicherheitssignal S' und das Steuersignal 35 einen sicheren Zustand (logisch "1") melden.

Bei dieser lediglich beispielhaften Vorgehensweise ist Voraussetzung für eine erneute Zustandsänderung somit ein übereinstimmender Verlauf (z.B. Folge von logischen "0"- und "1"-Zuständen) für das Steuersignal 35 als Ergebnis der logischen Verknüpfung und das lokale Sicherheitssignal S'.

Bei der Local-Variante gemäß Fig. 3 ist im Unterschied zu den vorstehend erläuterten Remote-Varianten lediglich ein lokales Sicherheitsmodul vorgesehen, das als Sicherheitssensor 15 ausgebildet ist. Der Sicherheitssensor 15' ist nicht über das Feldbussystem 27, über welches die Prozess-SPS 13 mit der Steuereinheit 17 kommuniziert, an die Steuereinheit 17 angeschlossen, sondern der Sicherheitssensor 15' kommuniziert entsprechend den Varianten in Fig. 1 und 4 direkt mit der Steuereinheit 17.

Die lokalen Sicherheitssignale S', S" des Sicherheitssensors 15' werden wiederum sowohl direkt über das Schnellschaltmodul 31 am Steuerausgang 21 der Steuereinheit 17 bereitgestellt sowie mit den Prozesssignalen P des Prozessmoduls 13 im Logikmodul 19 der Steuereinheit 17 logisch verknüpft.

Die sicherheitsgerichtete Steuerung des Steuerausgangs 21 erfolgt hier somit ausschließlich durch die lokalen Sicherheitssignale S', S".

Auch in dieser Local-Variante kann grundsätzlich eine beliebige Anzahl von Steuereinheiten 17 vorgesehen sein, die jeweils ein oder mehrere Prozesseinrichtungen 11 steuern und an die jeweils ein oder mehrere Sicherheitsmodule 15' angeschlossen sind.

Grundsätzlich ist erfindungsgemäß auch eine gemischte Systemauslegung denkbar, in der eine oder mehrere lokale Steuereinheiten 17 Sicherheitssignale S von einem Remote-Sicherheitsmodul 15 empfangen (entsprechend Fig. 1 oder 4; so genannter RSR (Remote Safety Release)) und eine oder mehrere weitere Steuereinheiten 17 jeweils direkt mit einem oder mehreren lokalen Sicherheitsmodulen 15' verbunden sind (entsprechend Fig. 3; so genannter LSR (Local Safety Release)).

In der Variante gemäß Fig. 4 ist das Logikmodul 19 nicht in der lokalen Steuereinheit 17 vorgesehen, sondern die logische Verknüpfung der Prozesssignale P mit den lokalen Sicherheitssignalen S" erfolgt in der übergeordneten Sicherheits-SPS 15, die zusätzlich zu dem lokalen Sicherheitssensor 15' vorgesehen ist. Das Ergebnis der logischen Verarbeitung, also das Steuersignal 35, wird der Steuereinheit 17 und damit dem Schnellschaltmodul 31 somit von der Sicherheits-SPS 15 bereitgestellt.

Die Erfindung kann grundsätzlich an allen bestehenden industriellen Bussystemen realisiert werden, beispielsweise an den Bussystemen mit der Bezeichnung Profibus, Interbus und DeviceNet sowie an Ethernet-Derivaten. Darüber hinaus ist die Erfindung auch für alle zukünftigen gemischten Bussysteme geeignet, welche eine Übertragung von sowohl Prozessdaten als auch Sicherheitsdaten zulassen.

Die Realisierung der vorstehend anhand der Fig. 1 und 4 beschriebenen RSR-Funktion kann beispielsweise für die Bussysteme DeviceNet und DeviceNet Safety umgesetzt werden. Hierzu wird für den Austausch der Prozessdaten zwischen dem auch als Remote-Ausgangsmodul bezeichneten Sicherheitsmodul (Target) und dem auch als Standard-Steuerung bezeichneten Prozessmodul (Originator) eine Standard-DeviceNet-Verbindung eingerichtet. Über diese Verbindung können mittels einer so genannten herstellerspezifischen Ausgangsassembly die nicht sicheren Eingangsdaten für die RSR-Funktion geliefert werden. Des Weiteren wird eine sichere Kommunikationsverbindung zwischen der Steuereinheit und der Sicherheits-SPS aufgebaut. Über diese Kommunikationsverbindung werden mittels einer dem DeviceNet-Geräteprofil entsprechenden Ausgangsassembly die sicheren Eingangsdaten für die RSR-Funktion übertragen.

Auch die vorstehend in Verbindung mit Fig. 3 beschriebene LSR-Funktion kann beispielsweise für das Bussystem DeviceNet umgesetzt werden. Hierzu wird wiederum eine Standard-DeviceNet-Verbindung eingerichtet, um für den Austausch der Prozessdaten zwischen dem Target (Steuereinheit) und dem Originator (Prozess-SPS) zu sorgen. Über diese Verbindung können dann die nicht sicheren Eingangsdaten für die LSR-Funktion mittels einer herstellerspezifischen Ausgangsassembly geliefert werden. Die für die sicherheitsgerichtete Zustimmung notwendigen Sicherheitssignale werden dann von den lokal an die Steuereinheit angeschlossenen Sicherheitssensoren erzeugt.

### Bezugszeichenliste

- 11: Prozesseinrichtung, Aktor
- 13: Prozessmodul, Prozess-SPS
- 15: Sicherheitsmodul, Sicherheits-SPS
- 15': Sicherheitsmodul, Sicherheitssensor
- 17: Steuereinheit, Ausgangsmodul
- 19: Logikmodul
- 21: Steuerausgang der Steuereinheit
- 23: Signaleingang der Steuereinheit
- 25: Signaleingang der Steuereinheit
- 27: Kommunikationssystem, Feldbussystem
- 29: Schnellschaltpfad
- 31: Schnellschaltmodul
- 33: lokaler Sicherheitseingang
- 35: Ergebnis der logischen Verknüpfung, Steuersignal

- P: Prozesssignal des Prozessmoduls
- S: Sicherheitssignal des Sicherheitsmoduls
- S', S": lokales Sicherheitssignal

## Patentansprüche

1. Verfahren zur Prozesssteuerung,
bei dem wenigstens eine zu steuernde Prozesseinrichtung (11) durch zumindest ein Prozessmodul (13) und zumindest ein Sicherheitsmodul (15, 15') gesteuert wird, indem
- nicht sicherheitsrelevante Prozesssignale (P) des Prozessmoduls (13) und die Prozesssicherheit betreffende Sicherheitssignale (S, S', S") des Sicherheitsmoduls (15, 15') logisch miteinander verknüpft werden, und
- zumindest ein lokales Sicherheitssignal (S') eines lokalen Sicherheitssensors (15') direkt unter Umgehung dieser logischen Verknüpfung über einen Schnellschaltpfad (29) wenigstens einem Steuerausgang (21) einer der Prozesseinrichtung (11) zugeordneten lokalen Steuereinheit (17) zugeführt wird, um eine schnelle Zustandsänderung an der zu steuernden Prozesseinrichtung (11), die an den Steuerausgang (21) angeschlossen ist, zu bewirken,
wobei der Schnellschaltpfad (29) eine Schnellschaltfunktion umfasst, mit der das Ergebnis (35) der logischen Verknüpfung und das lokale Sicherheitssignal (S') gemeinsam ausgewertet werden, und
wobei eine über den Schnellschaltpfad (29) bewirkte schnelle Zustandsänderung an der zu steuernden Prozesseinrichtung (11) erneut geändert, insbesondere wieder rückgängig gemacht, wird, wenn die gemeinsame Auswertung zu einem vorgegebenen Ergebnis führt.

2. Verfahren nach Anspruch 1,
**dadurch gekennzeichnet,**
**dass** eine schnelle Zustandsänderung an der zu steuernden Prozesseinrichtung (11) nur dann erneut geändert wird, wenn durch das Ergebnis (35) der logischen Verknüpfung die schnelle Zustandsänderung bestätigt wird, wobei bevorzugt die erneute Änderung erst dann erfolgt, wenn der lokale Sicherheitssensor (15') in einen Zustand, insbesondere einen sicheren Zustand, entsprechend einem Zustand vor Aussendung des lokalen Sicherheitssignals (S') übergegangen und dieser Zustand durch das Ergebnis (35) der logischen Verknüpfung ebenfalls bestätigt worden ist.

3. Verfahren nach Anspruch 1 oder 2,
**dadurch gekennzeichnet,**
**dass** die Schnellschaltfunktion in der lokalen Steuereinheit (17) ausgeführt wird.

4. Verfahren nach einem der vorhergehenden Ansprüche,
**dadurch gekennzeichnet,**
**dass** die logische Verknüpfung in der Steuereinheit (17) erfolgt.

5. Verfahren nach einem der Ansprüche 1 bis 3,
**dadurch gekennzeichnet,**
**dass** die logische Verknüpfung in einem zentralen oder übergeordneten Sicherheitsmodul (15), insbesondere in einer zentralen oder übergeordneten Sicherheits-SPS, erfolgt.

6. System zur Prozesssteuerung, insbesondere zur Durchführung eines Verfahrens nach einem der vorhergehenden Ansprüche,
mit wenigstens einer zu steuernden Prozesseinrichtung (11), zumindest einem Prozessmodul (13) und wenigstens einem Sicherheitsmodul (15, 15'), wobei
- die Prozesseinrichtung (11) an den Steuerausgang (21) einer lokalen, der Prozesseinrichtung (11) zugeordneten Steuereinheit (17) angeschlossen ist,
- ein Logikmodul (19) vorgesehen ist, in dem nicht sicherheitsrelevante Prozesssignale (P) des Prozessmoduls (13) und die Prozesssicherheit betreffende Sicherheitssignale (S, S') des Sicherheitsmoduls (15, 15') logisch miteinander verknüpfbar sind, **dadurch gekennzeichnet, daß**
- wenigstens ein lokaler Sicherheitseingang (33) vorgesehen ist, von dem ein lokales Sicherheitssignal (S') eines lokalen Sicherheitssensors (15') direkt unter Umgehung des Logikmoduls (19) dem Steuerausgang (21) der Steuereinheit (17) zuführbar ist, um eine schnelle Zustandsänderung an der zu steuernden Prozesseinrichtung (11) zu bewirken, und
- ein Schnellschaltmodul (31) vorgesehen ist, mit dem das Ergebnis (35) der logischen Verknüpfung und das über den lokalen Sicherheitseingang (33) zugeführte lokale Sicherheitssignal (S') gemeinsam auswertbar sind, wobei das Schnellschaltmodul (31) dazu ausgebildet ist, eine bewirkte schnelle Zustandsänderung an der zu steuernden Prozesseinrichtung (11) erneut zu ändern, insbesondere wieder rückgängig zu machen, wenn die gemeinsame Auswertung zu einem vorgegebenen Ergebnis führt.

7. System nach Anspruch 6,
**dadurch gekennzeichnet,**
**dass** das Schnellschaltmodul (31) in die Steuereinheit (17) integriert ist.

8. System nach Anspruch 6 oder 7,
**dadurch gekennzeichnet,**
**dass** der lokale Sicherheitseingang (33) an der Steuereinheit (17) vorgesehen ist.

9. System nach einem der Ansprüche 6 bis 8,
**dadurch gekennzeichnet,**
**dass** das Logikmodul (19) in die Steuereinheit (17) integriert ist.

10. System nach einem der Ansprüche 6 bis 8,
**dadurch gekennzeichnet,**
**dass** das Logikmodul (19) in ein zentrales oder übergeordnetes Sicherheitsmodul (15), insbesondere in eine zentrale oder übergeordnete Sicherheits-SPS, integriert ist.

11. System nach einem der Ansprüche 6 bis 10,
**dadurch gekennzeichnet,**
**dass** das Schnellschaltmodul (31) zwischen das Logikmodul (19) und den Steuerausgang (21) der Steuereinheit (17) geschaltet ist.

12. System nach einem der Ansprüche 6 bis 11,
**dadurch gekennzeichnet,**
**dass** zumindest das Prozessmodul (13) über ein Feldbussystem (27) mit der Steuereinheit (17) verbunden ist.

13. System nach einem der Ansprüche 6 bis 12,
**dadurch gekennzeichnet,**
**dass** das Prozessmodul (13) und das Sicherheitsmodul (15) entfernt von der Steuereinheit (17) angeordnet und über ein gemeinsames Kommunikationssystem (27), insbesondere ein Feldbussystem, mit der Steuereinheit (17) verbunden sind.

14. System nach einem der Ansprüche 6 bis 12,
**dadurch gekennzeichnet,**
**dass** das Prozessmodul (13) entfernt von der Steuereinheit (17) angeordnet und über ein zentrales Kommunikationssystem (27), insbesondere ein Feldbussystem, mit der Steuereinheit (17) verbunden ist, und dass das Sicherheitsmodul (15') lokal im Bereich der Steuereinheit (17) und insbesondere entfernt von dem Prozessmodul (13) angeordnet und direkt mit der Steuereinheit (17) verbunden ist.

15. System nach einem der Ansprüche 6 bis 14,
**dadurch gekennzeichnet,**
**dass** das Sicherheitsmodul (15) eine Sicherheitssteuerung, insbesondere in Form einer SPS, umfasst.

16. System nach einem der Ansprüche 6 bis 15,
**dadurch gekennzeichnet,**
**dass** das Sicherheitsmodul (15') zumindest einen Sicherheitssensor umfasst.

## Claims

1. A method for process control,
wherein at least one process device (11) to be controlled is controlled by at least one process module (13) and at least one safety module (15, 15') in that
- process signals (P) of the process module (13) not relevant to safety and safety signals (S, S', S") of the safety module (15, 15') relating to the process safety are logically linked to one another; and
- at least one local safety signal (S') of a local safety sensor (15') is supplied directly via a fast switching path (29) to at least one control output (21) of a local control unit (17) associated with the process device (11) while bypassing this logical linking operation in order to effect a fast change in state at the process device (11) to be controlled which is connected to the control output (21);
wherein the fast switching path (29) includes a fast switching function with which the result (35) of the logical linking operation and the local safety signal (S') are evaluated together; and
wherein a fast change in state at the process device (11) to be controlled effected via the fast switching path (29) is changed again, is in particular reversed again, when the common evaluation produces a preset result.

2. A method in accordance with claim 1, **characterized in that** a fast change in state at the process device (11) to be controlled is only changed again if the fast change in state is confirmed by the result (35) of the logical linking operation, with the repeat change preferably only taking place when the local safety sensor (15') has changed to a state, in particular a safe state, in accordance with a state before the transmission of the local safety signal (S') and when this state has likewise been confirmed by the result (35) of the logical linking operation.

3. A method in accordance with claim 1 or claim 2, **characterized in that** the fast switching function is carried out in the local control unit (17).

4. A method in accordance with any one of the preceding claims, **characterized in that** the logical linking operation takes place in the control unit (17).

5. A method in accordance with any one of the claims 1 to 3, **characterized in that** the logical linking operation takes place in a central or higher ranking safety module (15), in particular in a central or higher ranking safety MPC.

6. A system for process control, in particular for the carrying out of a method in accordance with any one of the preceding claims, comprising at least one process device (11) to be controlled, at least one process module (13) and at least one safety module (15, 15'), wherein
- the process device (11) is connected to the control output (21) of a local control unit (17) associated with the process device (11);
- a logic module (19) is provided in which process signals (P) of the process module (13) not relevant to safety and safety signals (S, S") of the safety module (15, 15') relating to process safety can be logically linked to one another;
**characterized in that**
- at least one local safety input (33) is provided of which a local safety signal (S') of a local safety sensor (15') can be supplied directly to the control output (21) of the control unit (17) while bypassing the logic module (19) to effect a fast state change at the process device (11) to be controlled; and
- a fast switching module (31) is provided with which the result (35) of the logical linking operation and the local safety signal (S') supplied via the local safety input (33) can be evaluated together, with the fast switching module (31) being configured to change an effected fast change in state at the process device (11) to be controlled again, in particular to reverse it again, when the common evaluation produces a preset result.

7. A system in accordance with claim 6, **characterized in that** the fast switching module (31) is integrated into the control unit (17).

8. A system in accordance with claim 6 or claim 7, **characterized in that** the local safety input (33) is provided at the control unit (17).

9. A system in accordance with any one of the claims 6 to 8, **characterized in that** the logic module (19) is integrated into the control unit (17).

10. A system in accordance with any one of the claims 6 to 8, **characterized in that** the logic module (19) is integrated into a central or higher ranking safety module (15), in particular into a central or higher ranking safety MPC.

11. A system in accordance with any one of the claims 6 to 10, **characterized in that** the fast switching module (31) is connected between the logic module (19) and the control output (21) of the control unit (17).

12. A system in accordance with any one of the claims 6 to 11, **characterized in that** at least the process module (13) is connected to the control unit (17) via a field bus system (27).

13. A system in accordance with any one of the claims 6 to 12, **characterized in that** the process module (13) and the safety module (15) are arranged remote from the control unit (17) and are connected to the control unit (17) via a common communication system (27), in particular a field bus system.

14. A system in accordance with any one of the claims 6 to 12, **characterized in that** the process module (13) is arranged remote from the control unit (17) and is connected to the control unit (17) via a central communication system (27), in particular a field bus system; and **in that** the safety module (15') is arranged locally in the region of the control unit (17) and in particular is arranged remote from the process module (13) and is directly connected to the control unit (17).

15. A system in accordance with any one of the claims 6 to 14, **characterized in that** the safety module (15) includes a safety control, in particular in the form of an MPC.

16. A system in accordance with any one of the claims 6 to 15, **characterized in that** the safety module (15') includes at least one safety sensor.

## Revendications

1. Procédé pour la commande d'un processus,
dans lequel au moins un système de processus (1) à commander est commandé par au moins un module de processus (13) et par au moins un module de sécurité (15, 15') par le fait que
- des signaux de processus (P) ne concernant pas la sécurité, provenant du module de processus (13), et des signaux de sécurité (S, S', S") concernant la sécurité, provenant du module de sécurité (15, 15') sont chaînés les uns aux autres de façon logique, et
- au moins un signal de sécurité local (S') est amené directement à un capteur de sécurité local (15') en contournant ce chaînage logique via un trajet de commutation rapide (29) d'au moins une sortie de commande (21) d'une unité de commande locale (17) associée au système de processus (11), afin de provoquer une modification rapide d'état au niveau du système de processus (11) à commander qui est raccordé à la sortie de commande (21),
dans lequel le trajet de commutation rapide (29) comprend une fonction de commutation rapide avec laquelle le résultat (35) du chaînage logique et le signal de sécurité local (S') sont évalués en commun, et
dans lequel une modification rapide de l'état provoqué via le trajet de commutation rapide (29) au niveau du système de processus (11) à commander est à nouveau modifiée, en particulier annulée, lorsque l'évaluation commune mène à un résultat prédéterminé.

2. Procédé selon la revendication 1,
**caractérisé en ce qu'**une modification rapide de l'état au niveau du système de processus (11) à commander n'est modifié à nouveau que lorsque le résultat (35) du chaînage logique confirme la modification rapide de l'état, et la nouvelle modification a de préférence lieu uniquement quand le capteur de sécurité local (15') a été transféré dans un état, en particulier dans un état de sécurité, qui correspond à un état avant l'émission du signal de sécurité local (S'), et que cet état a été également confirmé par le résultat (35) du chaînage logique.

3. Procédé selon la revendication 1 ou 2,
**caractérisé en ce que** la fonction de commutation rapide est exécutée dans l'unité de commande locale (17).

4. Procédé selon l'une des revendications précédentes,
**caractérisé en ce que** le chaînage logique a lieu dans l'unité de commande (17).

5. Procédé selon l'une des revendications 1 à 3,
**caractérisé en ce que** le chaînage logique a lieu dans un module de sécurité (15) central ou maître, en particulier dans une commande par programme enregistré (CPE) de sécurité centrale ou maître.

6. Système pour la commande de processus, en particulier pour la mise en oeuvre d'un procédé selon l'une des revendications précédentes,
comprenant au moins un système de processus (11) à commander, au moins un module de processus (13) et au moins un module de sécurité (15, 15'), dans lequel
- le système de processus (11) est connecté à la sortie de commande (21) d'une unité de commande locale (17) associée au système de processus (11),
- il est prévu un module logique (19) dans lequel les signaux de processus (P) qui ne concernent pas la sécurité, provenant du module de processus (13), et les signaux de sécurité (S, S') qui concernent la sécurité, provenant du module de sécurité (15, 15'), peuvent être chaînés les uns aux autres de manière logique,
**caractérisé en ce que**
- il est prévu au moins une entrée de sécurité locale (33), depuis laquelle un signal de sécurité local (S') d'un capteur de sécurité local (15') peut être amené à l'entrée de commande (21) de l'unité de commande (17) en contournant le module logique (19), pour provoquer une modification rapide de l'état au niveau du système de processus (11) à commander, et
- il est prévu un module de commutation rapide (31), au moyen duquel le résultat (35) du chaînage logique et le signal de sécurité local (S') amené via l'entrée de sécurité locale (33) peuvent être évalués en commun, et le module de commutation rapide (31) est réalisé en vue de modifier à nouveau une modification rapide de l'état effectuée au niveau du système de processus (11) à commander, en particulier de l'annuler, quand l'évaluation commune mène à un résultat prédéterminé.

7. Système selon la revendication 6,
**caractérisé en ce que** le module de commutation rapide (31) est intégré dans l'unité de commande (17).

8. Système selon la revendication 6 ou 7,
**caractérisé en ce que** l'entrée de sécurité locale (33) est prévue au niveau de l'unité de commande (17).

9. Système selon l'une des revendications 6 à 8,
**caractérisé en ce que** le module logique (19) est intégré dans l'unité de commande (17).

10. Système selon l'une des revendications 6 à 8,
**caractérisé en ce que** le module logique (19) est intégré dans un module de sécurité (15) central ou maître, en particulier dans un SPS de sécurité centrale ou maître.

11. Système selon l'une des revendications 6 à 10,
**caractérisé en ce que** le module de commutation rapide (31) est branché entre le module logique (19) et la sortie de commande (21) de l'unité de commande (17).

12. Système selon l'une des revendications 6 à 11,
**caractérisé en ce qu'**au moins le module de processus (13) est relié à l'unité de commande (17) via un système à bus de champ (27).

13. Système selon l'une des revendications 6 à 12,
**caractérisé en ce que** le module de processus (13) et le module de sécurité (15) sont agencés à distance de l'unité de commande (17) et sont reliés à l'unité de commande (17) via un système de communication commun (27), en particulier un système à bus de champ.

14. Système selon l'une des revendications 6 à 12,
**caractérisé en ce que** le module de processus (13) est agencé à distance de l'unité de commande (17) et est relié à l'unité de commande (17) via un système de communication central (27), en particulier un système à bus de champ, et **en ce que** le module de sécurité (15') est agencé localement dans la zone de l'unité de commande (17) et en particulier à distance du module de processus (13) et est relié directement à l'unité de commande (17).

15. Système selon l'une des revendications 6 à 14,
**caractérisé en ce que** le module de sécurité (15) comprend une commande de sécurité, en particulier sous la forme d'une commande par programme enregistré (CPE).

16. Système selon l'une des revendications 6 à 15,
**caractérisé en ce que** le module de sécurité (15') comprend au moins un capteur de sécurité.
